# EUROPEAN PATENT APPLICATION

(11) **EP 4 435 634 A1**
(43) Date of publication of application: **25.09.2024**
(21) Application number: 23191902.8
(22) Date of filing: 17.08.2023
(51) Int. Cl.: G06F 16/955, G06F 40/174

(54) **INFORMATION PROCESSING SYSTEM AND PROGRAM**

(30) Priority: 24.03.2023 JP 2023049015
(71) Applicant: FUJIFILM Business Innovation Corp., Minato-ku Tokyo (JP)
(72) Inventor: TSUMEMITSU, Masaya, Yokohama-shi, Kanagawa (JP)
(74) Representative: Kurig, Thomas

(57) **Abstract**

An information processing system includes: one or plural processors configured to: manage input information that is information input to a website by a first user, in association with link information of the website; and in a case where an image related to the link information displayed on a display unit is selected by a second user different from the first user, display the input information of the first user associated with the link information on the display unit.

## Description

### BACKGROUND OF THE INVENTION

### (i) Field of the Invention

The present invention relates to an information processing system and a program.

### (ii) Description of Related Art

In JP2017-49966A, there is described an information processing apparatus capable of communicating a Web server and an authentication Web server that provide screen information and a management server having a table in which form data including a value to be input for each type of form included in specific screen information is defined. In JP2017-49966A, there are disclosed a Web browser that requests acquisition of the screen information to the Web server, loads the acquired screen information, and redirects to the authentication Web server by using information included in a response of the acquisition request, and a monitoring section that determines whether or not a URL of a screen displayed by the Web browser coincides with a URL included in the response of the acquisition request, and instructs the Web browser to load and execute a first script in a case where it is determined that the URL of the screen displayed by the Web browser coincides with the URL included in the response of the acquisition request and a user who is currently using the information processing apparatus is a user who is permitted to use an auto-complete function, in which by executing the first script, the form data according to the user who is currently using the information processing apparatus and the screen information is acquired from the management server, and a screen in which the screen information and a value to be input of the form data is reflected is displayed on a display unit.

In JP2018-152046A, there is described an information processing apparatus capable of connecting to a Web server and having a Web browser. In JP2018-152046A, there are disclosed an acquisition section that acquires location information indicating a location of user interface information indicating a user interface for inputting first user information for authentication requested by the Web server, and a setting section that sets, in a case where the Web browser receives the user interface information based on the location information and complementary information associated with second user information which is user information of a user who is logging in the information processing apparatus, previously input by the user interface based on the user interface information is saved, the complementary information as a value of the first user information input by the user interface.

### SUMMARY OF THE INVENTION

For example, an input of the user to a website may be supported by using the input information previously input by the user.

Here, in a case where there is no input information from the user, it is not possible to support the input of the user on the website. In addition, there may be a case where the user wants to support the input using the input information of another user instead of the input information of the user.

An object of the present disclosure is to improve convenience of a user who uses a website, as compared with a configuration in which only information input by the user is used.

According to a first aspect of the present disclosure, there is provided an information processing system including: one or a plurality of processors configured to: manage input information that is information input to a website by a first user, in association with link information of the website; and in a case where an image related to the link information displayed on a display unit is selected by a second user different from the first user, display the input information of the first user associated with the link information on the display unit.

According to a second aspect of the present disclosure, in the information processing system according to the first aspect, the one or plurality of processors may be configured to: display the input information of the first user to the website accessed by the second user, among the input information of the first user.

According to a third aspect of the present disclosure, in the information processing system according to the second aspect, the one or plurality of processors may be configured to: display the input information of the first user to the website accessed by the second user, in accordance with a transition of a web page included in the website.

According to a fourth aspect of the present disclosure, in the information processing system according to the first aspect, the one or plurality of processors may be configured to: display the input information of the first user in a state in which the second user does not access the website related to the selected image.

According to a fifth aspect of the present disclosure, in the information processing system according to any one of the first aspect to the fourth aspect, the one or plurality of processors may be configured to: identifiably display a component selected by the first user, among components of a web page included in the website related to the image selected by the second user.

According to a sixth aspect of the present disclosure, in the information processing system according to any one of the first aspect to the fifth aspect, the one or plurality of processors may be configured to: not display a content of information satisfying a predetermined condition on the display unit even in a case where the information is the input information of the first user to the website related to the image selected by the second user.

According to a seventh aspect of the present disclosure, in the information processing system according to the sixth aspect, the predetermined condition may be secret information of the first user.

According to an eighth aspect of the present disclosure, in the information processing system according to any one of the first aspect to the seventh aspect, the one or plurality of processors may be configured to: in a case where a plurality of pieces of input information input by a plurality of first users are associated with one link information, identifiably display each of the plurality of pieces of input information.

According to a ninth aspect of the present disclosure, in the information processing system according to the eighth aspect, the one or plurality of processors may be configured to: display each of the plurality of pieces of input information for each of the first users who input the input information.

According to a tenth aspect of the present disclosure, in the information processing system according to the eighth aspect, the one or plurality of processors may be configured to: display a list of contents of the plurality of pieces of input information.

According to an eleventh aspect of the present disclosure, in the information processing system according to any one of the first aspect to the tenth aspect, the one or plurality of processors may be configured to: in a case where a plurality of pieces of input information input by a plurality of first users are associated with one link information, display user information indicating each of the plurality of first users, together with the input information.

According to a twelfth aspect of the present disclosure, in the information processing system according to the eleventh aspect, the one or plurality of processors may be configured to: identifiably display the user information between the first user who inputs the input information to one web page included in the website accessed by using the one link information and the first user who does not input the input information to the one web page.

According to a thirteenth aspect of the present disclosure, in the information processing system according to any one of the first aspect to the twelfth aspect, the one or plurality of processors may be configured to: in a case where the image is selected by the second user and one first user is selected by the second user among first users who input the input information associated with the link information related to the image, display a new image related to the link information associated with the input information of the one first user.

According to a fourteenth aspect of the present disclosure, in the information processing system according to any one of the first aspect to the thirteenth aspect, the one or plurality of processors may be configured to: display a button image that accepts an instruction related to an association between the input information to the website and the link information of the website from the first user, in association with the image.

According to a fifteenth aspect of the present disclosure, there is provided a program causing a computer to realize: a function of managing input information that is information input to a website by a first user, in association with link information of the website; and a function of displaying, in a case where an image related to the link information displayed on a display unit is selected by a second user different from the first user, the input information of the first user associated with the link information on the display unit.

According to the first aspect and the fifteenth aspect of the present disclosure, it is possible to improve convenience of a user who uses the website, as compared with a configuration in which only input information by the user is used.

According to the second aspect of the present disclosure, it is possible to improve the convenience of the user who uses the website, as compared with a configuration in which only the input information of the user to the website being accessed is displayed.

According to the third aspect of the present disclosure, it is possible to improve the convenience of the user who uses the website, as compared with a configuration in which the input information is displayed without considering the displayed web page.

According to the fourth aspect of the present disclosure, it is possible to improve the convenience of the user who intends to use the website, as compared with a configuration in which the input information is displayed in a case where the user is accessing the website.

According to the fifth aspect of the present disclosure, it is possible to improve the convenience of the user who selects the component, as compared with a configuration in which the components of the web page included in the website are uniformly displayed.

According to the sixth aspect of the present disclosure, it is possible to improve the convenience of the user who refers to the input information of other users, as compared with a configuration in which contents of all the input information of the other users are displayed.

According to the seventh aspect of the present disclosure, it is possible to protect a privacy of the other user, as compared with a configuration in which the contents of all the input information of the other users are displayed.

According to the eighth aspect of the present disclosure, it is possible to improve the convenience of the user who refers to the plurality of pieces of input information, as compared with a configuration in which the pieces of input information of the different users are uniformly displayed.

According to the ninth aspect of the present disclosure, it is possible to improve the convenience of the user who refers to the plurality of pieces of input information, as compared with a configuration in which the pieces of input information of the different users are uniformly displayed.

According to the tenth aspect of the present disclosure, it is possible to improve the convenience of the user who refers to the plurality of pieces of input information, as compared with a configuration in which the input information is displayed for each user.

According to the eleventh aspect of the present disclosure, it is possible to improve the convenience of the user who refers to the input information of a plurality of users, as compared with a configuration in which only the input information is displayed.

According to the twelfth aspect of the present disclosure, it is possible to improve the convenience of the user who refers to the user information, as compared with a configuration in which the user information is uniformly displayed regardless of the presence or absence of input information.

According to the thirteenth aspect of the present disclosure, it is possible to display the new image related to the link information associated with the input information required by the user.

According to the fourteenth aspect of the present disclosure, it is possible to accept the instruction related to the association between the input information and the link information.

### BRIEF DESCRIPTION OF THE DRAWINGS

Exemplary embodiment(s) of the present invention will be described in detail based on the following figures, wherein:
Fig. 1 is a diagram illustrating an example of an overall configuration of an information processing system to which the present exemplary embodiment is applied;
Fig. 2 is a diagram illustrating an example of a hardware configuration of a management server and a user terminal according to the present exemplary embodiment;
Fig. 3 is a diagram illustrating an example of a functional configuration of the management server according to the present exemplary embodiment;
Fig. 4 is a diagram illustrating an example of a functional configuration of the user terminal according to the present exemplary embodiment;
Fig. 5 is a flowchart illustrating an example of a flow of a process of recording input information;
Fig. 6 is a flowchart illustrating an example of a flow of a process of displaying past input information;
Fig. 7 is a diagram illustrating an example of a display example in a display unit to which the present exemplary embodiment is applied;
Figs. 8A and 8B are diagrams illustrating another example of the display example in the display unit to which the present exemplary embodiment is applied, Fig. 8Aillustrates a state in which a login page of a website is displayed on a browser screen, and Fig. 8B illustrates a state in which a homepage of the website is displayed on the browser screen;
Figs. 9A and 9B are diagrams illustrating still another example of the display example in the display unit to which the present exemplary embodiment is applied, Fig. 9A illustrates a state in which a purchase application page of the website is displayed on the browser screen, and Fig. 9B illustrates a state in which an instruction to close the browser screen is given;
Figs. 10A and 10B are diagrams illustrating still another example of the display example in the display unit to which the present exemplary embodiment is applied, Fig. 10A illustrates a state in which the login page of the website on which reference information is reflected is displayed on the browser screen, and Fig. 10B illustrates a state in which the homepage of the website on which the reference information is reflected is displayed on the browser screen;
Figs. 11A and 11B are diagrams illustrating still another example of a display example in the display unit to which the present exemplary embodiment is applied, Fig. 11A illustrates a state in which a purchase application page of the website in which the reference information is reflected is displayed on the browser screen, and Fig. 11B illustrates a state in which the purchase application page of the website in which the reference information is presented is displayed on the browser screen;
Fig. 12 is a diagram illustrating still another example of the display example in the display unit to which the present exemplary embodiment is applied;
Fig. 13 is a diagram illustrating still another example of the display example in the display unit to which the present exemplary embodiment is applied;
Figs. 14A and 14B are diagrams illustrating still another example of the display example in the display unit to which the present exemplary embodiment is applied, Fig. 14A illustrates a state in which a reference user selection screen is displayed, and Fig. 14B illustrates a state in which the website in which reference information of a selected reference user is presented is displayed on the browser screen;
Fig. 15 is a diagram illustrating still another example of the display example in the display unit to which the present exemplary embodiment is applied;
Figs. 16A and 16B are diagrams illustrating still another example of the display example in the display unit to which the present exemplary embodiment is applied, Fig. 16A illustrates a state in which a new link object is displayed on a dedicated UI, and Fig. 16B illustrates a state in which a link destination website of the new link object is displayed on the browser screen;
Fig. 17 is a diagram illustrating still another example of the display example in the display unit to which the present exemplary embodiment is applied;
Figs. 18A and 18B are diagrams illustrating still another example of the display example in the display unit to which the present exemplary embodiment is applied, Fig. 18A illustrates a state in which a browsing button is selected, and Fig. 18B illustrates a state in which a reference user icon is selected; and
Figs. 19A and 19B are diagrams illustrating an example of information managed by the information processing system, Fig. 19A illustrates information indicating an operation history of a plurality of reference users for the link object, and Fig. 19B illustrates information indicating an input history of one reference user to the link destination website of the link object.

### DETAILED DESCRIPTION OF THE INVENTION

Hereinafter, exemplary embodiments of the present invention will be described in detail with reference to drawings.

### (Overall Configuration of Information Processing System 1)

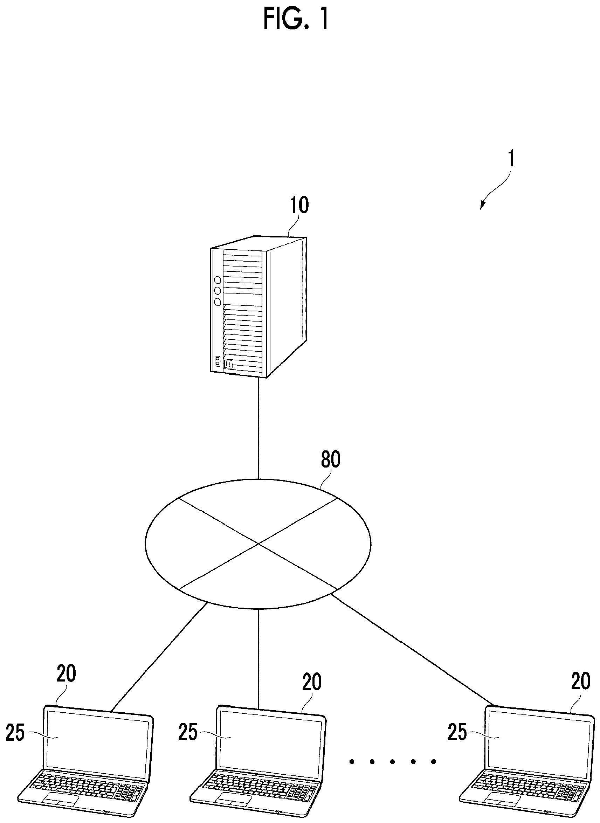

Fig. 1 is a diagram illustrating an example of an overall configuration of an information processing system 1 to which the present exemplary embodiment is applied.

The information processing system 1 according to the present exemplary embodiment is configured by connecting a management server 10 that manages link information of a website shared by a plurality of users and a user terminal 20 that is a terminal operated by a user via a communication line 80. The communication line 80 is, for example, a line such as the Internet, and is used in information communication between the management server 10 and the user terminal 20.

### (Management Server 10)

The management server 10 according to the present exemplary embodiment is an information processing apparatus as a server that manages the entire information processing system 1. The management server 10 acquires various types of information transmitted from each of the user terminals 20, and performs various types of processing. In addition, the management server 10 transmits various types of information to each of the user terminals 20.

For example, the management server 10 manages various types of information in association with an object (hereinafter, referred to as a "link object") that is an image related to link information of a website. Specifically, the management server 10 manages various types of information in association with identification information capable of uniquely specifying the link object.

The information associated with the link object includes, for example, link information of a link destination website, input information input by the user for the link destination website, and the like. The link information includes, for example, a uniform resource locator (URL) for accessing the link destination website, web page information of the website, and the like. The web page information is information on a web page which is a group of data displayed as one side, and is data constituting the website. The web page information includes, for example, a representative URL of the website, HTML information of the web page, and the like. The representative URL of the website is a description common to each URL of the web pages constituting the website, and is, for example, a description of a scheme name and a domain name in the URL. In addition, the input information of the user for the link destination website includes, for example, a value for an HTML tag of the website such as text information input to the website or selection information such as a click operation on a component of the website.

The user input information for the link destination website is associated with the link object in a state in which the user who performs the input can be identified. In other words, the input information of the user for the link destination website is associated with the link information of the website in a state in which the user who performs the input can be identified.

The management server 10 shares the link object and various types of information associated with the link object, among the plurality of users. Specifically, the management server 10 records input information of one user to the link destination website of the link object, and shares the recorded input information with other users who use the link object. Hereinafter, in the present exemplary embodiment, a user whose input information is referred to by another user is referred to as a reference user, and a user who refers to and uses the input information of the reference user is referred to as a using user. In a case where the reference user and the using user are not distinguished, the reference user and the using user are referred to as users.

The reference user is an example of a first user, and the using user is an example of a second user.

The management server 10 generates a link object. Specifically, the management server 10 generates a link object based on an instruction of a user related to the creation of the link object, associates various types of information with the link object, and stores and manages the link object in a database.

In addition, the management server 10 controls to display one or more link objects stored in the database on the user terminal 20. Specifically, the management server 10 performs control of displaying a user interface (hereinafter, referred to as a "dedicated UI") of dedicated application software that enables creation and display of a link object capable of being shared by the plurality of users, on the user terminal 20. In addition, the management server 10 controls to display one or more link objects on the dedicated UI displayed on the user terminal 20 in a mode capable of being individually designated by an input operation of the user.

In a case where the input operation for designating one of the one or more link objects displayed on the dedicated UI is performed, the management server 10 accesses a URL of a link destination associated with the designated link object. The management server 10 performs control for displaying the link destination website and control for recording input information for the website. In addition, in a case where an input operation for designating one link object in which the input information is recorded is performed, the management server 10 performs control of displaying a content of the input information of a reference user associated with the designated link object.

In the information processing system 1 illustrated in Fig. 1, the management server 10 is configured with one server, and may be configured with a plurality of servers. Further, the management server 10 may be configured as a so-called cloud server, or may be configured as an on-premises type server.

### (User Terminal 20)

The user terminal 20 in the present exemplary embodiment is an apparatus operated by a user who uses the information processing system 1. Each of the user terminals 20 acquires various types of information transmitted from the management server 10, and performs various types of processing. In addition, each of the user terminals 20 transmits various types of information to the management server 10.

For example, the user terminal 20 accepts input information input by the user to a link destination website of a link object, and transmits the input information to the management server 10. The input information transmitted to the management server 10 includes, for example, text information input to the website, selection information such as a click operation on a component of the website, and the like.

Each of the user terminals 20 is provided with a display unit 25 consisting of a liquid crystal display panel, an organic electro luminescence (EL) display panel, or the like for displaying an image, text information, or the like to the user. The user terminal 20 is realized by, for example, a computer, a tablet-type information terminal, a smartphone, a game device, and other information processing apparatuses.

The configuration of the information processing system 1 described above is an example, and the information processing system 1 as a whole may have a function of realizing the above processes. Therefore, a part or entirety of the function for realizing the process described above may be shared or cooperated in the information processing system 1. In other words, the part or entirety of the function of the management server 10 may be a function of the user terminal 20, or the part or entirety of the function of the user terminal 20 may be a function of the management server 10. Further, a part or entirety of the function of the management server 10 and each of the user terminals 20 constituting the information processing system 1 may be transferred to another server or the like (not illustrated). Therefore, the processes of the information processing system 1 as an entirety are promoted, and the processes can be complemented with each other.

Hereinafter, an outline of a function of the management server 10 to which the information processing system 1 of the present exemplary embodiment is applied will be described. Here, a case is assumed in which a reference user who uses a link destination website of a link object shared by a plurality of users records input information input to the web site.

The management server 10 acquires the input information for the website in response to an operation of the reference user for the user terminal 20. The management server 10 manages the input information of the reference user for the website in association with link information of the website. In other words, the management server 10 manages the input information of the reference user for the website in association with the link object of the website.

In a case where the link object is selected by a using user, the management server 10 displays input information managed in association with link information of a link destination website of the selected link object, on the display unit 25. Specifically, the management server 10 displays reference information, which is information generated based on the input information of the reference user to the link destination website of the selected link object, and is information in a format capable of being referred to by the using user, on the display unit 25.

Since the management server 10 of the present exemplary embodiment has the functions described above, reference information based on input information of the reference user different from the using user, which is input information to the link destination website of the link object selected by the using user is displayed on the display unit 25. According to the present exemplary embodiment, the using user can refer not only to the past input information of the using user but also to the past input information of the reference user.

In the present exemplary embodiment, the user does not need to create a material for a memorandum of a use method of a link destination website of a link object, an item to be input, or sharing with another user. In addition, the user does not need to search for and check a material about this website to check the use method of the link destination website of the link object or an item to be input. Therefore, convenience of the user who uses the website is improved.

Hereinafter, the information processing system 1 according to the present exemplary embodiment will be described in detail.

### (Hardware Configuration)

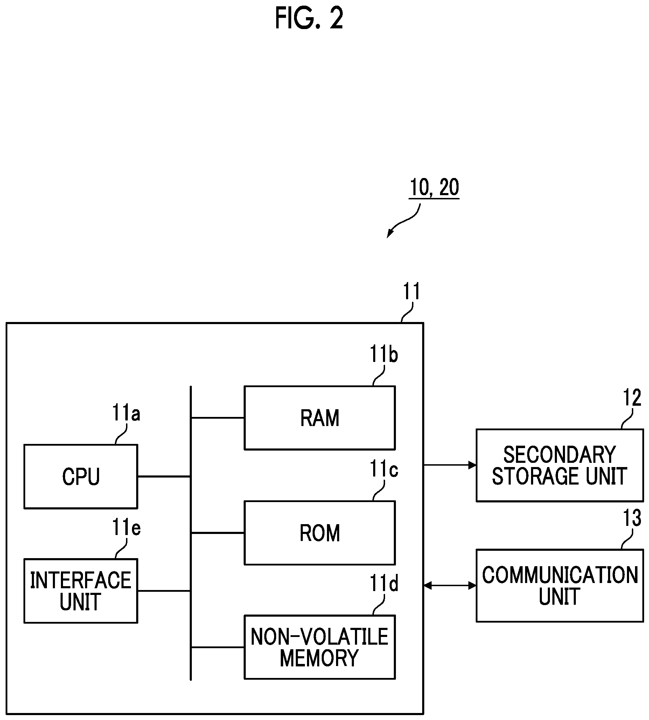

Fig. 2 is a diagram illustrating an example of a hardware configuration of the management server 10 and the user terminal 20 according to the present exemplary embodiment.

Each device of the management server 10 and the user terminal 20 includes a control unit 11 that controls an operation of the entire device, a secondary storage unit 12 in which various types of information is recorded, and a communication unit 13 that performs transmission and reception of information via the communication line 80 (see Fig. 1). The control unit 11, the secondary storage unit 12, and the communication unit 13 are connected to each other through a bus or a signal line.

The control unit 11 includes a CPU 11a that controls an entire apparatus as an example of a processor, a RAM 11b that is used as a working memory or the like of the CPU 11a, and a ROM 11c that stores a program or the like executed by the CPU 11a. Further, the control unit 11 includes a non-volatile memory 11d capable of holding data in a rewritable manner even in a case where power supply is interrupted, and an interface unit 11e that controls each unit such as the communication unit 13 connected to the control unit 11.

The non-volatile memory 11d is configured with, for example, an SRAM, a flash memory, or the like backed up by a battery. Further, in a case where the control unit 11 reads a program stored in the secondary storage unit 12, each process is executed by each apparatus of the present exemplary embodiment.

The secondary storage unit 12 is configured with, for example, a hard disk device (HDD), a semiconductor memory, or the like. The secondary storage unit 12 is different depending on a product form of each device. The secondary storage unit 12 stores a program to be executed by the control unit 11 or various types of information.

In addition, the user terminal 20 includes an input device (not illustrated) such as a keyboard or a mouse and the display unit 25 (see Fig. 1) configured with a liquid crystal display and the like. In a case where the input device of the user terminal 20 is a touch panel, the user terminal 20 may be provided integrally with the display unit 25.

### (Functional Configuration of Management Server 10)

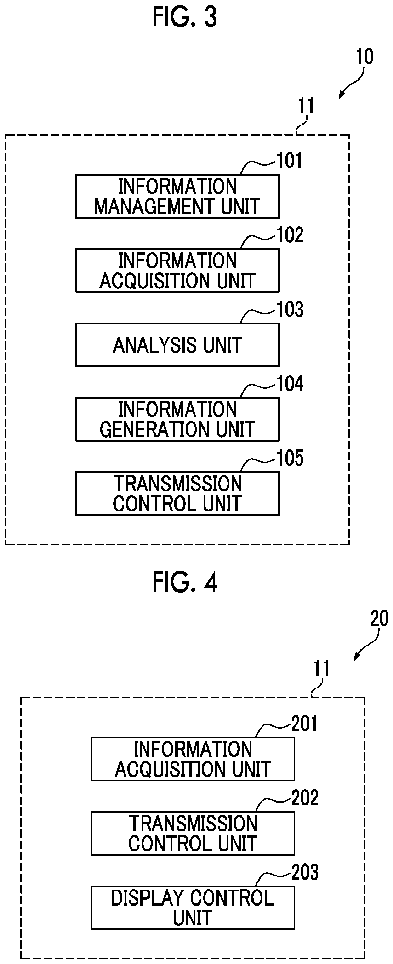

Fig. 3 is a diagram illustrating an example of a functional configuration of the management server 10 according to the present exemplary embodiment. Each function of the management server 10 illustrated in Fig. 3 is generally realized by the CPU 11a (see Fig. 2) of the control unit 11.

As illustrated in Fig. 3, the management server 10 includes an information management unit 101 that manages various types of information, an information acquisition unit 102 that acquires various types of information, an analysis unit 103 that analyzes various types of information, an information generation unit 104 that generates various types of information, and a transmission control unit 105 that controls transmission of various types of information.

The information management unit 101 stores and manages various types of information in a database of the secondary storage unit 12 (see Fig. 2). For example, the information management unit 101 stores and manages various types of information such as link information or input information of a reference user to a link destination website of a link object generated by the information generation unit 104 to be described below, in association with the link object.

In a case where the input information of the reference user to the link destination website of the link object satisfies a predetermined condition, the information management unit 101 stores and manages that the input information exists, in association with the link object. In other words, in a case where the input information of the reference user to the link destination website of the link object satisfies the predetermined condition, the information management unit 101 stores and manages a content of the input information in a hidden state in association with the link object. For example, the information management unit 101 stores and manages text information input by the reference user in a state in which the text information is replaced with a hidden text, in association with the link object.

Here, the "predetermined condition" includes, for example, secret information. The secret information includes personal information of the reference user, information designated by the reference user not to be shared with the using user, information that cannot be used by the using user, and the like. The personal information of the reference user includes, for example, a user ID, a password, an e-mail address, and the like.

The information management unit 101 may change the management of information by a mode of recording the input information of the reference user to the link destination website of the link object (hereinafter, referred to as a "recording mode"). The information management unit 101 does not record the input information of the reference user for the link destination website of the link object in a case where the recording mode is off, and records and manages the input information of the reference user in association with the link object in a case where the recording mode is on.

In addition, in a case where various types of information associated with the link object are changed, the information management unit 101 updates the information stored in the secondary storage unit 12 based on the changed content. For example, in a case where a reference user who newly accesses the link destination website of the link object performs an input, the information management unit 101 updates the input information managed in association with the link object. Further, for example, in a case where a new link object to which one input information among a plurality of pieces of input information associated with the same link object is associated is created, the information management unit 101 updates the information on the link object.

The information acquisition unit 102 acquires various types of information. For example, the information acquisition unit 102 acquires information transmitted from each of the user terminal 20 and an outside. Among the information acquired by the information acquisition unit 102, the information transmitted from the user terminal 20 includes, for example, input information input for creating a link object, input information input for designating a link object, input information input to a link destination website of the link object, and the like. In addition, among the information acquired by the information acquisition unit 102, the information transmitted from the outside includes, for example, HTML information of a link destination website, transmitted from an external server or the like of an access destination in a case where a URL of the link destination website is accessed, and the like.

The analysis unit 103 analyzes various types of information. For example, the analysis unit 103 analyzes a link destination website. Specifically, the analysis unit 103 analyzes a web page constituting the website, according to a representative URL of the link destination website or similarity of a response of a user response to the website.

A method used for the analysis of the link destination website by the analysis unit 103 is not particularly limited. For example, a method of analyzing HTML information of a web page, a method of analyzing a structure of the web page, or the like may be used. Among these methods, in a case where the method of analyzing the HTML information of the web page is used, a method of analyzing a document object model (DOM) which is an application programming interface (API) that defines elements and the like constituting an HTML document may be used.

The information generation unit 104 generates various types of information. For example, the information generation unit 104 generates a link object based on input information acquired by the information acquisition unit 102, which is input for creating the link object. In addition, the information generation unit 104 generates reference information that is information capable of being referred to by the using user, based on the input information acquired by the information acquisition unit 102 and input to the link destination website of the link object. The link object and the reference information generated by the information generation unit 104 are stored and managed in the secondary storage unit 12.

The transmission control unit 105 controls transmission of various types of information. Specifically, the transmission control unit 105 controls transmission of various types of information to each of the user terminal 20 and the outside. Among the information transmitted under the control of the transmission control unit 105, the information transmitted to the user terminal 20 includes, for example, the link object or the reference information generated by the information generation unit 104, and the like.

### (Functional Configuration of User Terminal 20)

Fig. 4 is a diagram illustrating an example of a functional configuration of the user terminal 20 according to the present exemplary embodiment. Each function of the user terminal 20 illustrated in Fig. 4 is generally realized by the CPU 11a (see Fig. 2) of the control unit 11.

As illustrated in Fig. 4, the user terminal 20 includes an information acquisition unit 201 that acquires various types of information, a transmission control unit 202 that controls transmission of various types of information, and a display control unit 203 that controls a display of the display unit 25 (see Fig. 1).

The information acquisition unit 201 acquires various types of information. Specifically, the information acquisition unit 201 acquires information transmitted from the management server 10 and the outside. Among the information acquired by the information acquisition unit 201, the information transmitted from the management server 10 includes, for example, a generated link object, reference information, or the like.

In addition, the information acquisition unit 201 acquires information input via an input device or the like. The information input via the input device or the like includes, for example, input information input for creating a link object, input information input for designating the link object, input information to a link destination website of the link object, and the like.

The transmission control unit 202 controls transmission of various types of information. Specifically, the transmission control unit 202 controls transmission of various types of information to the management server 10 and the outside. Among the information transmitted under the control of the transmission control unit 202, the information transmitted to the management server 10 includes, for example, input information input for creating a link object, input information input for designating the link object, input information for a link destination website of the link object, and the like.

The display control unit 203 controls to display various types of information on the display unit 25. Specifically, the display control unit 203 controls to display a dedicated UI on the display unit 25. In addition, the display control unit 203 controls to display various types of information on the dedicated UI. The information displayed on the dedicated UI by the control of the display control unit 203 includes, for example, a link object, a link destination website of the link object, reference information of the website, and the like.

### (Flow of Process of Recording Input Information)

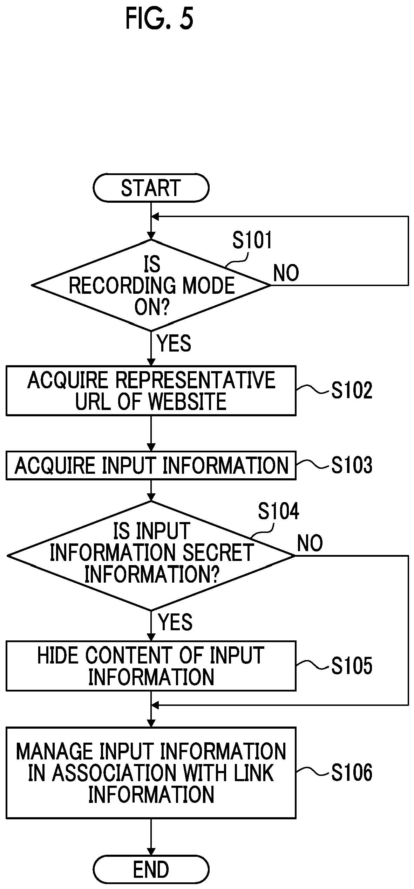

Fig. 5 is a flowchart illustrating an example of a flow of a process of recording input information.

Fig. 5 illustrates a case where input information of a reference user to a link destination website of a link object is recorded, as an example.

The management server 10 specifies whether or not the recording mode is on (S101). In a case where the recording mode is off (NO in S 101), the management server 10 repeats S101 until the recording mode is turned on.

In S101, in a case where the recording mode is on (YES in S101), the management server 10 acquires a representative URL of a link destination website of a link object (S102). The management server 10 acquires input information of a reference user to the link destination website of the link object (S103).

Next, the management server 10 specifies whether or not the acquired input information of the reference user is secret information (S104).

In a case where the acquired input information of the reference user is the secret information (YES in S104), the management server 10 hides a content of the input information of the reference user (S105). The management server 10 manages the input information of the reference user in a state in which the content is hidden in association with link information of the link object (S 106), and ends the process.

In a case where the acquired input information of the reference user is not the secret information in S104 (NO in S 104), the management server 10 manages the input information of the reference user in association with the link information of the link object (S106), and ends the process.

### (Flow of Process of Displaying Past Input Information)

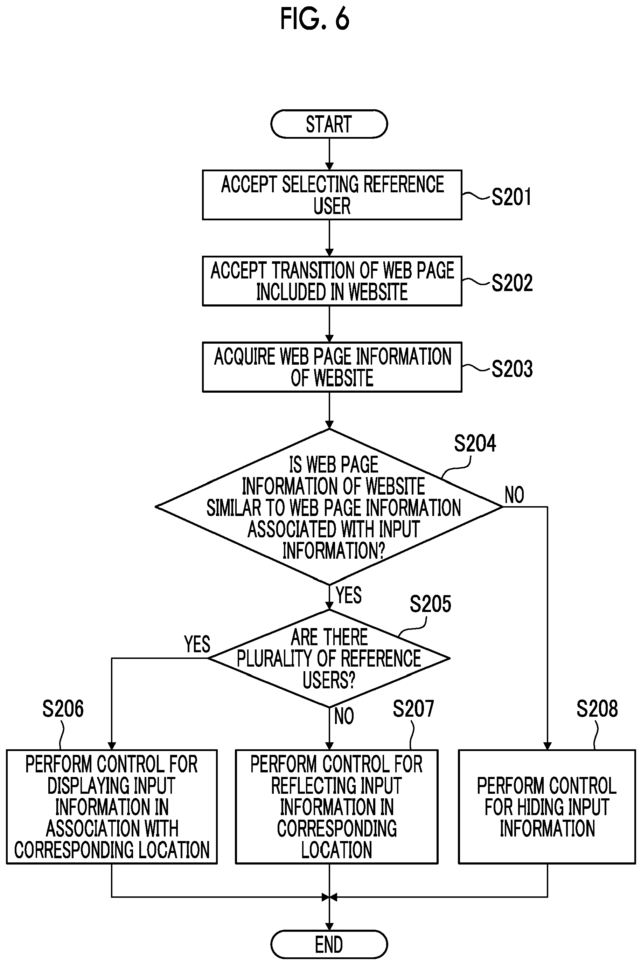

Fig. 6 is a flowchart illustrating an example of a flow of a process of displaying past input information.

Fig. 6 illustrates a case where a using user refers to reference information based on input information of a reference user to a link destination website of a link object, as an example.

The management server 10 accepts selecting the reference user of which the reference information is to be displayed, from the using user via the user terminal 20 (S201). In addition, the management server 10 accepts a transition of a web page included in the website from the using user via the user terminal 20 (S202).

Next, the management server 10 acquires web page information of the link destination website of the link object selected by the using user (S203). Specifically, the management server 10 acquires a representative URL of the link destination website of the link object selected by the using user, and an HTML information of the web page after the transition.

The management server 10 specifies whether or not the web page information of the link destination website of the link object selected by the using user is similar to web page information associated with the input information (S204). Specifically, the management server 10 specifies whether or not the representative URL of the link destination website of the link object selected by the using user and the HTML information of the web page after the transition are similar to a representative URL of a website associated with the input information and HTML information of a web page.

In a case where the web page information of the link destination website of the link object selected by the using user is similar to the web page information associated with the input information (YES in S204), the management server 10 specifies whether or not there are a plurality of reference users of which reference information is to be displayed (S205).

In a case where there are a plurality of reference users of which reference information is to be displayed (YES in S205), the management server 10 performs control for displaying input information in association with the corresponding location (S206), and ends the process. Specifically, the reference information based on the input information of the reference user is displayed on the display unit 25 (see Fig. 1) in association with the corresponding HTML tag.

On the other hand, in a case where the number of reference users for which reference information is displayed is not a plurality and there is a single reference user (NO in S205), the management server 10 performs control for reflecting the input information in the corresponding location (S207), and ends the process. Specifically, the reference information based on the input information of the reference user is displayed on the display unit 25 in a state in which the reference information is input into the corresponding HTML tag.

In S204, in a case where the web page information of the link destination website of the link object selected by the using user is not similar to the web page information associated with the input information (NO in S204), the management server 10 performs control for hiding the input information of the reference user (S208), and ends the process. Specifically, the reference information based on the input information input by the reference user to another web page is not displayed on the web page of the link destination website of the link object selected by the using user.

### (Display Example of Display Unit 25)

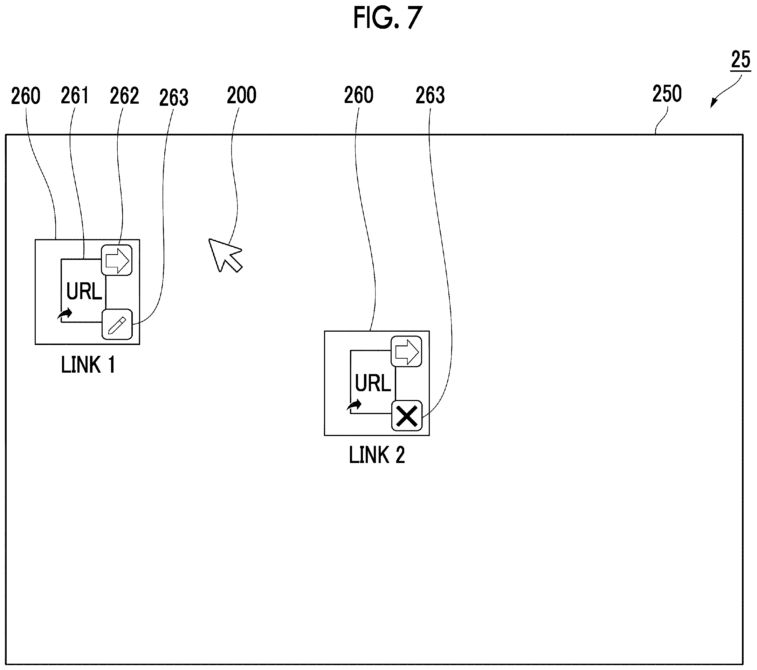

Fig. 7 is a diagram illustrating an example of a display example in the display unit 25 to which the present exemplary embodiment is applied.

In the example illustrated in Fig. 7, a dedicated UI 250 including a link object 260 is displayed on the display unit 25 to which the present exemplary embodiment is applied. Further, a cursor 200 is displayed on the dedicated UI 250 as an example of a pointer image that is moved in response to an operation of a mouse or the like by a user.

The link object 260 includes a link object main body 261, an access button 262 that accepts an instruction to access a link destination website from the user, and a recording mode button 263 that accepts a setting of a recording mode. The access button 262 and the recording mode button 263 are displayed in association with the link object main body 261. In addition, text information indicating a name capable of identifying a link object, a name of a link destination website of the link object, or the like may be displayed in association with each other. The link object main body 261 may be, for example, a picture or a symbol notifying a link, or a thumbnail image of the link destination website.

The access button 262 is a button image that accepts an instruction to open the link destination website from the user. In a case where the access button 262 is selected by a reference user, a URL of the link destination website of the link object is accessed, and a web page of the website is displayed on the display unit 25.

The recording mode button 263 is a button image that accepts from the user an instruction related to an association between input information to the website and link information for the website. Specifically, the recording mode button 263 is a button image that accepts from the user an instruction to switch the recording mode on and off. The display mode is different between the recording mode button 263 in a case where the recording mode is on and the recording mode button 263 in a case where the recording mode is off. For example, the recording mode button 263 included in the link object 260 of "link 1" is in a state in which the recording mode is on, and accepts an instruction to change the recording mode to be off from the reference user. Further, the recording mode button 263 included in the link object 260 of "link 2" is in a state in which the recording mode is off, and accepts an instruction to change the recording mode to be on from the reference user.

Not only the recording mode button 263 may be provided for each link object 260, but also one recording mode button may be provided on the dedicated UI 250. Specifically, a recording mode button for collectively switching the recording modes of a plurality of link objects 260 on and off may be displayed on the dedicated UI 250.

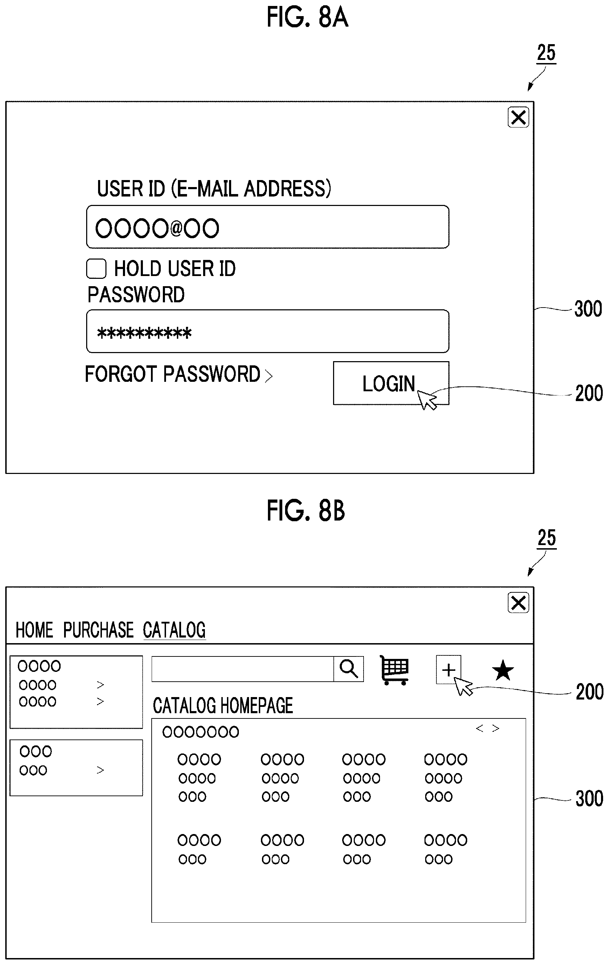

Figs. 8A and 8B are diagrams illustrating another example of the display example in the display unit 25 to which the present exemplary embodiment is applied, Fig. 8A illustrates a state in which a login page of a website is displayed on a browser screen 300, and Fig. 8B illustrates a state in which a homepage of the website is displayed on the browser screen 300.

In the present exemplary embodiment, in a case where the access button 262 of the link object 260 of "link 1" illustrated in Fig. 7 is selected by a reference user, as illustrated in Fig. 8A, the browser screen 300 in which a link destination website of the link object 260 of "link 1" is opened is displayed. The link destination website of the link object 260 may be opened by application software that provides the dedicated UI 250 (see Fig. 7), or may be opened by software different from the application software.

Further, in the present exemplary embodiment, the access button 262 of the link object 260 is selected in a state in which a recording mode is on, and input information of the reference user to the website displayed on the browser screen 300 is recorded. In addition, in a case where the recording mode button 263 (see Fig. 7) is selected by the reference user after the browser screen 300 is displayed, the recording mode can be switched on and off.

In the display example illustrated in Fig. 8A, a login page of the link destination website of the link object 260 of "link 1" is displayed on the browser screen 300. In other words, on the browser screen 300, a web page that accepts login to the link destination website of the link object 260 of "link 1" is displayed. In the example illustrated in Fig. 8A, a user ID and a password are requested for logging in the website.

In a case where a login button is selected by the reference user in a state in which the user ID and the password are input on the login page illustrated in Fig. 8A, as illustrated in Fig. 8B, a homepage of the link destination website of the link object 260 of "link 1" is displayed on the browser screen 300. In other words, in a case where the login button illustrated in Fig. 8A is selected, the web page of the link destination website of the link object 260 of "link 1" transitions from the login page to the homepage illustrated in Fig. 8B.

In the login page illustrated in Fig. 8A, text information including the user ID and the password input by the reference user is recorded with hidden contents.

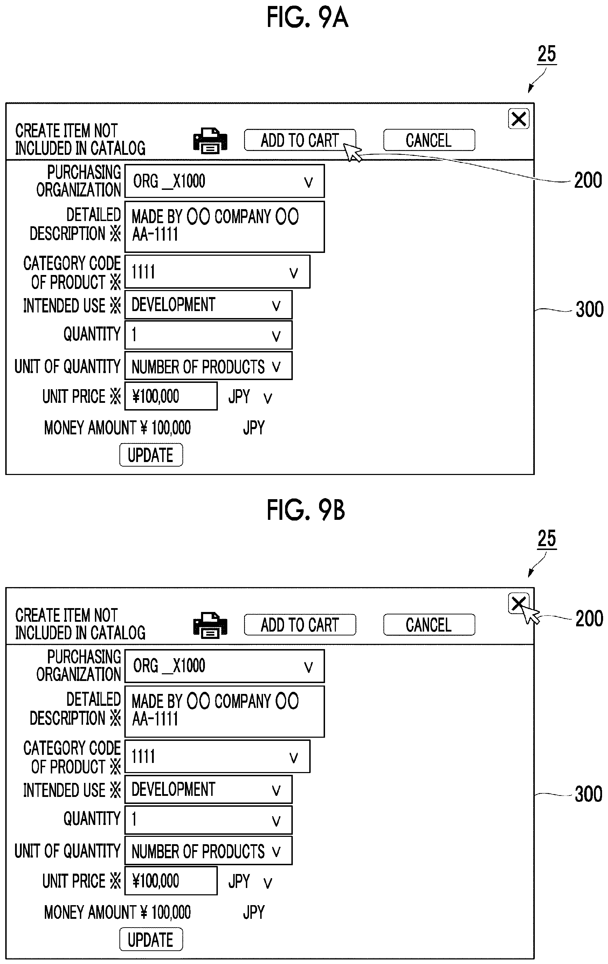

Figs. 9A and 9B are diagrams illustrating still another example of the display example in the display unit 25 to which the present exemplary embodiment is applied, Fig. 9A illustrates a state in which a purchase application page of a website is displayed on the browser screen 300, and Fig. 9B illustrates a state in which an instruction to close the browser screen 300 is given.

In the present exemplary embodiment, in a case where, for example, a component that accepts an instruction related to a purchase of an item not included in a catalog in the homepage illustrated in Fig. 8B is selected by a reference user, as illustrated in Fig. 9A, a purchase application page for applying a purchase of the item not included in the catalog is displayed on the browser screen 300.

In the homepage illustrated in Fig. 8B, the fact that the reference user selects the component that accepts the instruction related to the purchase of the item not included in the catalog is recorded as selection information of a component of the website.

In the display example illustrated in Fig. 9A, a purchase application page of a link destination website of the link object 260 of "link 1" is displayed on the browser screen 300. In other words, on the browser screen 300, a web page that accepts a purchase application on the link destination website of the link object 260 of "link 1" is displayed. In the example illustrated in Fig. 9A, as information required for the purchase application, information of various items such as an organization to which the reference user belongs or a purchasing organization that bears a cost of purchasing a product, a detailed description of the product, a category code of the product, an intended use of the product, the purchasing number of products, a unit of a purchase quantity of the product, and a unit price of the product are requested. In a case where an update button is selected in a state in which the information required for the purchase application is input, a total money amount is updated and displayed based on the input information.

In a case where an "add to cart" button is selected in a state in which the information required for the purchase application is input on the purchase application page illustrated in Fig. 9A, based on the information input on the purchase application page, the application for purchasing the product is made. In a case where an end button is selected as illustrated in Fig. 9B after the application for the purchase of the product is made, an instruction to close the browser screen 300 is accepted. In other words, in a case where the end button is selected as illustrated in Fig. 9B after the application for the purchase of the product is made, an instruction to close the website displayed on the browser screen 300 is accepted.

In the purchase application page illustrated in Fig. 9A, text information including information of various items input by the reference user and selection information in which the "add to cart" button which is a component of the purchase application page is selected are recorded. Further, on the purchase application page illustrated in Fig. 9B, selection information in which the reference user selects the end button which is a component of the browser screen 300 may be recorded. Therefore, it is recorded that the reference user ends the use of the website after applying for the purchase of the product.

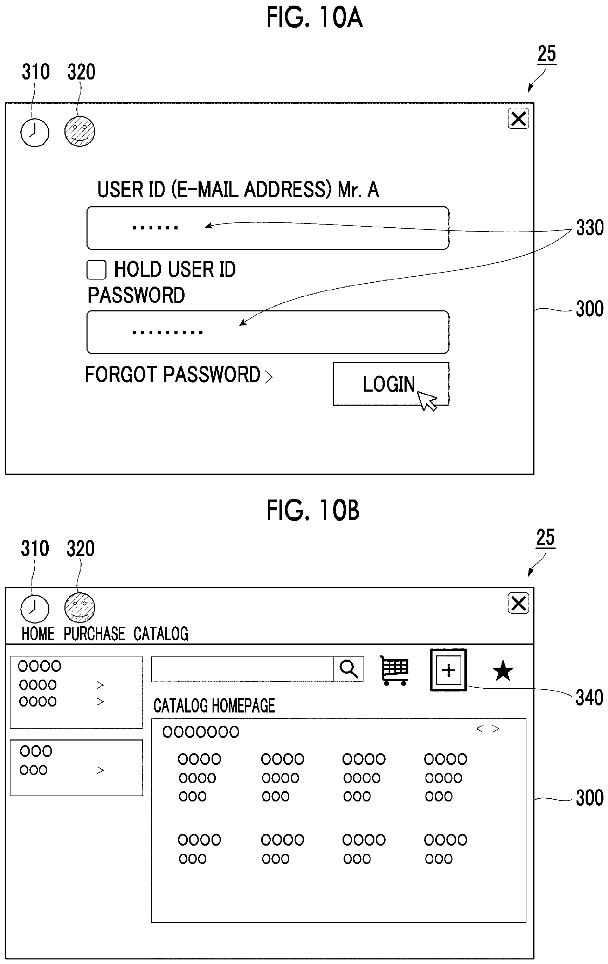

Figs. 10A and 10B are diagrams illustrating still another example of the display example in the display unit 25 to which the present exemplary embodiment is applied, Fig. 10A illustrates a state in which a login page of a website on which reference information is reflected is displayed on the browser screen 300, and Fig. 10B illustrates a state in which a homepage of the website on which the reference information is reflected is displayed on the browser screen 300.

In the present exemplary embodiment, in a case where the access button 262 of the link object 260 of "link 1" illustrated in Fig. 7 is selected by a using user, as illustrated in Fig. 10A, the browser screen 300 in a state in which reference information is reflected in a link destination website of the link object 260 of "link 1" is displayed. In other words, in the present exemplary embodiment, in a case where the using user accesses the link destination website of "link 1" illustrated in Fig. 7, among input information of a reference user, input information of the reference user to the website the using user is accessing is displayed on the browser screen 300. Specifically, reference information based on input information of a reference user "Mr. A" to the link destination website of the link object 260 of "link 1" is displayed on the browser screen 300.

The input information input by the using user on the browser screen 300 in a state in which the reference information is reflected may be recorded and managed in association with the link object.

In the display example illustrated in Fig. 10A, a reference button 310 that accepts a setting related to reference information, a reference user icon 320 indicating the existence of a reference user, and a reference text 330 input by the reference user are displayed on the browser screen 300.

The reference text 330 is not only reflected in an input field for a user ID and a password, but may be displayed in a location outside the input field for the user ID and the password and near the input field.

The reference button 310 is a button image for accepting an instruction related to a display of the reference information from the user. For example, the reference button 310 accepts an instruction from the user to switch between displaying and hiding the reference information.

The reference user icon 320 may indicate user information of the reference user. The reference user icon 320 may be displayed not only as a picture or a symbol, but also as a photograph or the like of the reference user. Further, as the user information of the reference user, as illustrated in Fig. 10A, the user name "Mr. A" of the reference user may be displayed on the browser screen 300.

The reference text 330 is displayed based on the text information input by the reference user. The reference text 330 based on the text information of the reference user "Mr. A" is reflected as a value of the corresponding HTML tag.

Further, even in a case of the input information input by the reference user, a content of information satisfying a predetermined condition such as secret information is not displayed. In the example illustrated in Fig. 10A, since the text information including the user ID and the password input by the reference user is secret information, the reference text 330 is displayed with a hidden text. Therefore, even in a case where the text information input by the reference user is secret information, the user is notified that something is input by the reference user.

In the present exemplary embodiment, in a case where a login button is selected by the using user in a state in which the user ID and the password of the using user are input on the login page illustrated in Fig. 10A, the web page displayed on the browser screen 300 transitions to a homepage illustrated in Fig. 10B of the link destination website of the link object 260 of "link 1". In addition, the input information of the reference user to the website accessed by the using user is displayed on the browser screen 300 in accordance with the transition of the web page included in the link destination website of the link object 260 of "link 1". Specifically, the input information of the reference user to the website accessed by the using user is displayed on the browser screen 300 in accordance with the transition from the login page to the homepage.

In the display example illustrated in Fig. 10B, the reference button 310, the reference user icon 320, and a notification image 340 for notifying a component selected by the reference user are displayed on the browser screen 300. The notification image 340 is an image for notifying a component of the web page selected by the reference user. In the example illustrated in Fig. 10B, the notification image 340 is an image surrounding the component selected by the reference user. In addition, a batch image or a message may be displayed in association with each other or may be blinked such that the component selected by the reference user among the components of the web page can be identified.

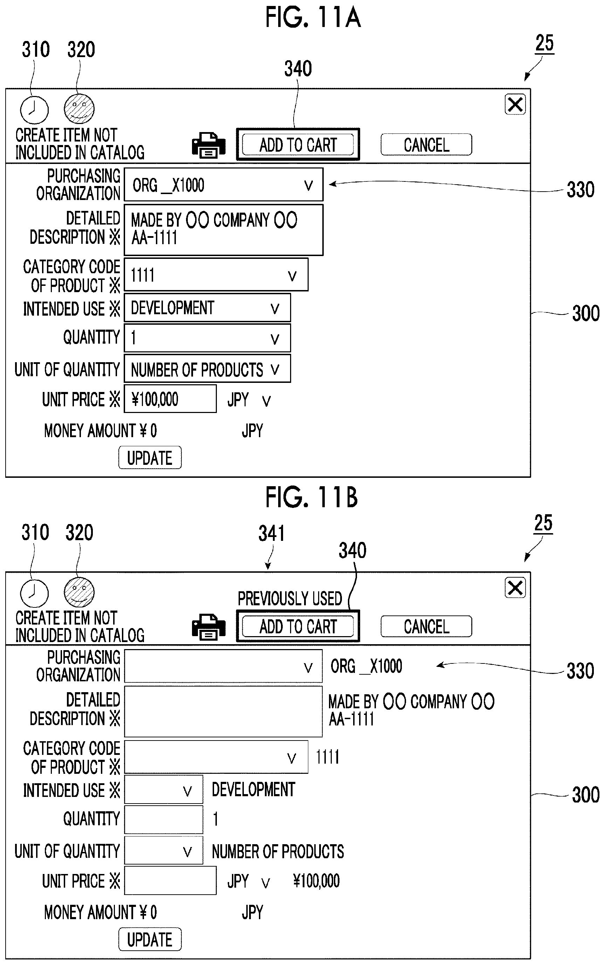

Figs. 11A and 11B are diagrams illustrating still another example of a display example in the display unit 25 to which the present exemplary embodiment is applied, Fig. 11A illustrates a state in which a purchase application page of a website in which reference information is reflected is displayed on the browser screen 300, and Fig. 11B illustrates a state in which the purchase application page of the website in which the reference information is presented is displayed on the browser screen 300.

In the present exemplary embodiment, in a case where, for example, a component that accepts an instruction to purchase an item not included in a catalog in the homepage illustrated in Fig. 10B is selected by a using user, as illustrated in Fig. 11A, a state in which reference information is reflected in the purchase application page for applying the purchase of the item not included in the catalog is displayed on the browser screen 300. Therefore, it is possible to refer to the past input information of a reference user, even for the information that is not held in advance by the website.

In the display example illustrated in Fig. 11A, the reference button 310, the reference user icon 320, the reference text 330, and the notification image 340 are displayed on the browser screen 300. Specifically, the reference text 330 corresponding to text information input by the reference user is reflected in various items of the purchase application, and the notification image 340 is displayed in association with a component "add to cart" button selected by the reference user, on the browser screen 300.

The purchase application page accepts an input by the using user for various items of the purchase application even in a state in which the reference information is reflected.

In addition, as illustrated in Fig. 11B, not only the notification image 340 but also a message for supplementing the notification image 340 such as "previously used" may be displayed in association with the component "add to cart" button selected by the reference user, as indicated by reference numeral 341. Therefore, the fact that the "add to cart" button is previously selected by the reference user is clearly notified.

In addition, as illustrated in Fig. 11B, the reference text 330 corresponding to the text information input by the reference user in a location outside an input field of various items of the purchase application and near the input field of the various items may be displayed. Therefore, the using user can input various items of the purchase application in a state in which the display of the reference information is maintained.

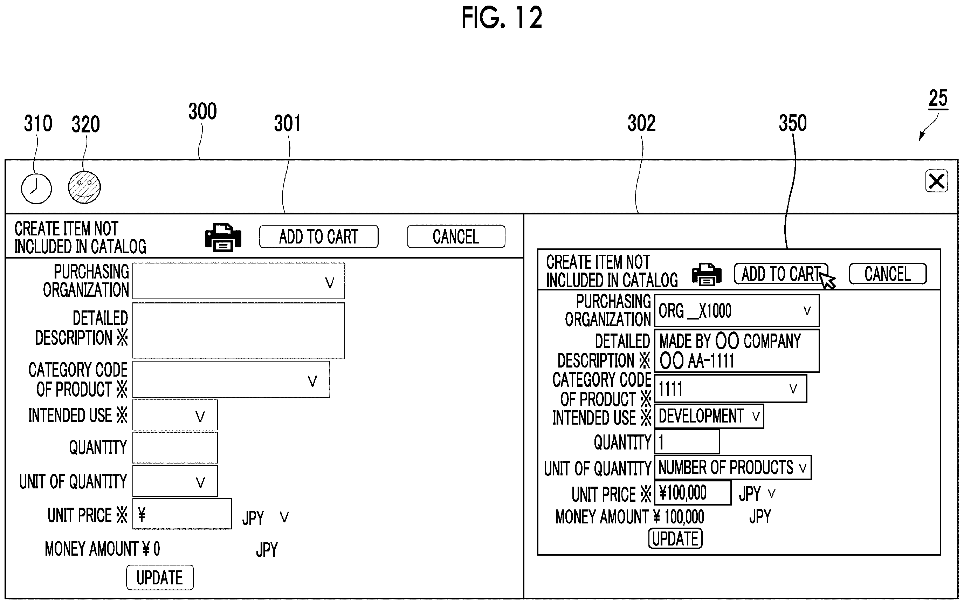

Fig. 12 is a diagram illustrating still another example of the display example in the display unit 25 to which the present exemplary embodiment is applied.

In the display example illustrated in Fig. 12, the browser screen 300 is provided with an input region 301 that accepts an input of a using user to a website and a reference region 302 that displays reference information of a reference user to the website. In the input region 301, a web page of the website is displayed. In the reference region 302, a snapshot 350 in a case where the reference user makes an input to the web page is displayed, as reference information corresponding to the web page displayed in the input region 301.

The snapshot 350 is a screen capture in which a state of the web page at a time of the input by the reference user is saved as an image. The snapshot 350 may be acquired, in a case where a predetermined component in the web page is selected, in a case where the reference user instructs, immediately before the transition of the web page, and the like.

The snapshot 350 of the reference region 302 is displayed in accordance with the transition of the web page displayed in the input region 301. In other words, the snapshot 350 displayed in the reference region 302 is switched in accordance with the transition of the web page displayed in the input region 301.

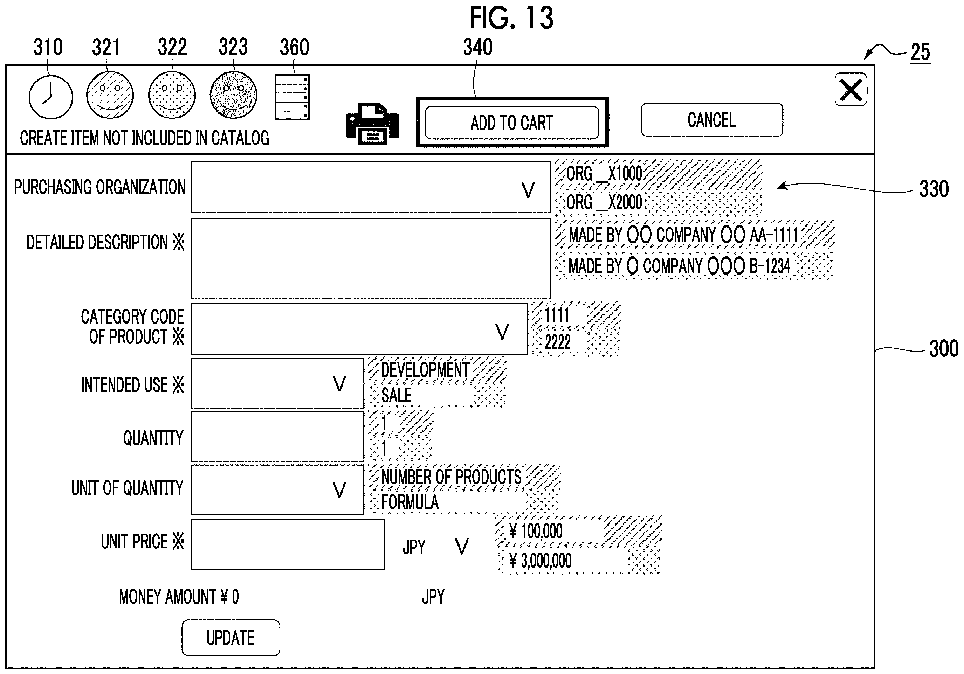

Fig. 13 is a diagram illustrating still another example of the display example in the display unit 25 to which the present exemplary embodiment is applied. Fig. 13 illustrates a state in which a plurality of reference information are displayed on a purchase application page of a website.

In the present exemplary embodiment, in a case where a plurality of input information input by a plurality of reference users are associated with one link information, user information indicating each of the plurality of reference users is displayed together with the input information.

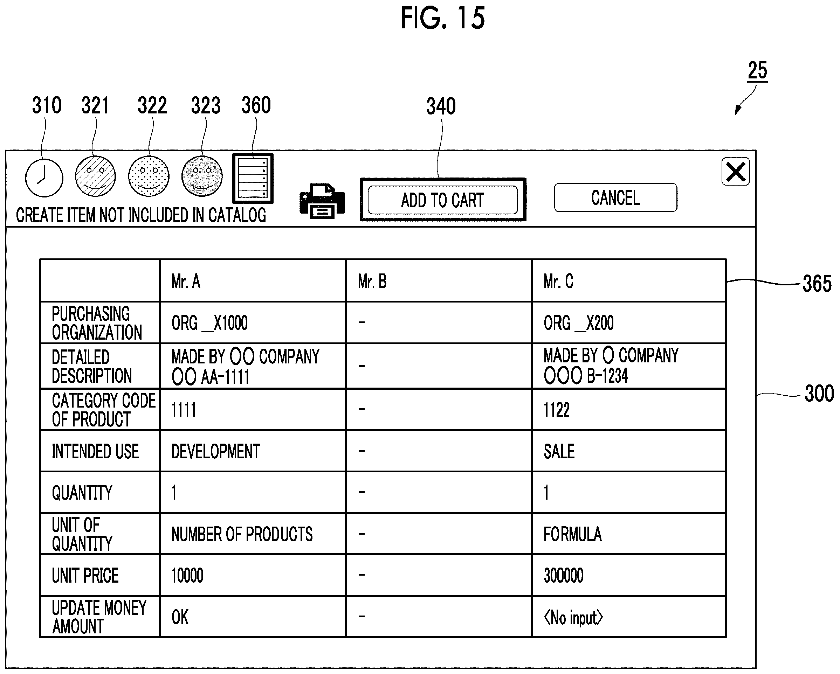

In the display example illustrated in Fig. 13, the reference button 310, a plurality of reference user icons 321, 322, and 323, the reference text 330, the notification image 340, and a list display button 360 that accepts an instruction for displaying a list of the plurality of reference information from the using user are displayed on the browser screen 300. The list display button 360 is a button image that accepts an instruction to display the list of the plurality of reference information from the using user. In a case where the list display button 360 is selected, a list table 365 (see Fig. 15) to be described below is displayed.

In a case where the reference button 310 can display reference information of the plurality of reference users, the reference button 310 receives an instruction related to selection of a reference user from the using user. For example, the reference button 310 displays user information indicating each of the plurality of reference users, and accepts an instruction related to a display of a screen for accepting selection of a reference user of which reference information is displayed, among reference users "Mr. A", "Mr. B", and "Mr. C".

The plurality of reference user icons 321, 322, and 323 are provided for each reference user, and each has a different display mode.

The reference user icon 321 corresponds to the reference user "Mr. A", the reference user icon 322 corresponds to the reference user "Mr. B", and the reference user icon 323 corresponds to the reference user "Mr. C". In a case where the reference user "Mr. C" records input information to a website but does not use a purchase application page of the website, the reference user icon 323 corresponding to the reference user "Mr. C" is displayed in gray out, for example. In other words, the reference user "Mr. C" of which input information to a web page displayed on the browser screen 300 is not recorded is displayed to be identifiable from the reference user icons 321 and 322 corresponding to the reference users "Mr. A" and "Mr. B" of which input information is recorded.

Each of a plurality of reference texts 330 is displayed to be identifiable for each reference user who inputs text information that is a source of the display. For example, each of the plurality of reference texts 330 is highlighted with the same color as the color attached to the reference user icons 321 and 322 of the reference users who input the text information that is the source of the display. Further, for example, each of the plurality of reference texts 330 may be displayed in texts having the same color as the color attached to the reference user icons 321 and 322 of the reference users who input the text information that is the source of the display. In addition, a user name of the reference user who inputs the text information that is the source of the display may be displayed in each of the plurality of reference texts 330.

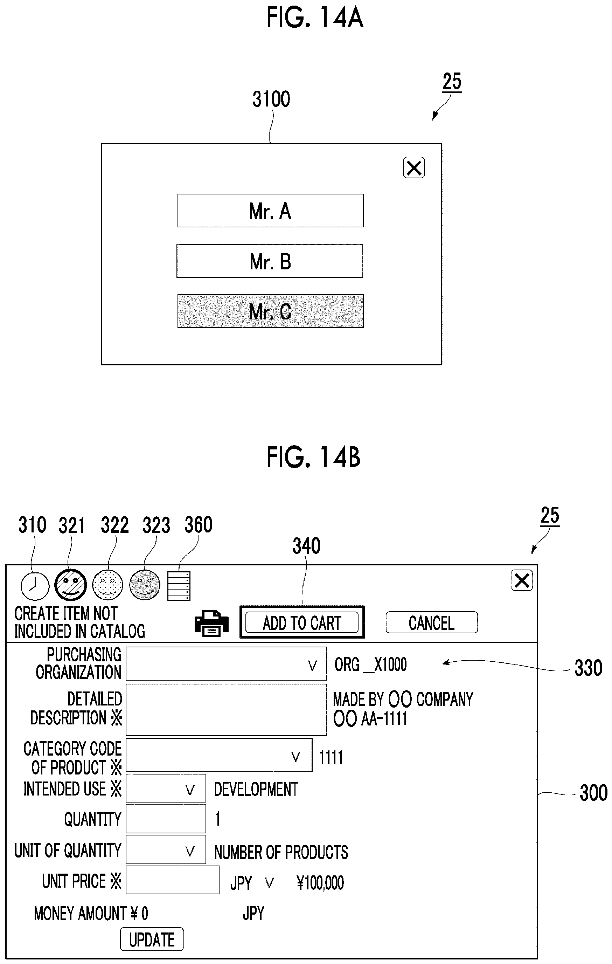

Figs. 14A and 14B are diagrams illustrating still another example of the display example in the display unit 25 to which the present exemplary embodiment is applied, Fig. 14A illustrates a state in which a reference user selection screen 3100 is displayed, and Fig. 14B illustrates a state in which a website in which reference information of a selected reference user is presented is displayed on the browser screen 300.

In the present exemplary embodiment, in a case where the reference button 310 illustrated in Fig. 13 is selected by a using user, the reference user selection screen 3100 that accepts designation of a reference user of which input information is to be displayed as reference information, as illustrated in Fig. 14A.

In the display example illustrated in Fig. 14A, the reference user selection screen 3100 accepts designation of a reference user of which reference information is to be displayed, among the reference users "Mr. A", "Mr. B", and "Mr. C". The reference user selection screen 3100 may accept designations of a plurality of reference users. Further, for example, a region for accepting selection of the reference user "Mr. C" of which input information to the purchase application page of the website illustrated in Fig. 13 is not recorded is displayed in gray out.

In a case where the reference user "Mr. A" is selected by the using user on the reference user selection screen 3100 illustrated in Fig. 14A, the reference information of the reference user "Mr. A" is displayed on the purchase application page of the website, as illustrated in Fig. 14B. In addition, the reference information of the reference user "Mr. B" displayed in Fig. 13 is hidden. In other words, a plurality of reference information is displayed for each reference user.

In the display example illustrated in Fig. 14B, the reference user icon 321 corresponding to the reference user "Mr. A" selected by the using user on the reference user selection screen 3100 (see Fig. 14A) is displayed to be identifiable from the other reference user icons 322 and 323. In other words, the reference user icon 321 corresponding to the reference user "Mr. A" selected by the using user is displayed in a state of being emphasized more than the other reference user icons 322 and 323.

In addition, in a case where the reference user icon 321 corresponding to the reference user "Mr. A" is selected by the using user on the purchase application page of the website illustrated in Fig. 13, as illustrated in Fig. 14B, only the reference information of the reference user "Mr. A" may be displayed on the purchase application page of the website.

In addition, in a case where the reference user icon 322 corresponding to the reference user "Mr. B" is selected by the using user on the purchase application page of the website illustrated in Fig. 13, as illustrated in Fig. 14B, the reference information of the reference user "Mr. B" may be hidden on the purchase application page of the website.

Fig. 15 is a diagram illustrating still another example of the display example in the display unit 25 to which the present exemplary embodiment is applied. Fig. 15 illustrates a state in which the list table 365 is displayed.

In the present exemplary embodiment, in a case where the list display button 360 is selected by a using user in a state in which the purchase application page of the website illustrated in Fig. 13 is displayed, the list table 365 is displayed on the browser screen 300, as illustrated in Fig. 15.

In the display example illustrated in Fig. 15, the reference button 310, the plurality of reference user icons 321 and 322, 323, the notification image 340, the list display button 360, and the list table 365 in which contents of a plurality of reference information are displayed in a list are displayed on the browser screen 300.

The list table 365 is a list table of the plurality of reference information. In the list table 365, reference information based on input information of a reference user to a web page displayed in a case where the list display button 360 is selected is displayed. In the example illustrated in Fig. 15, in the list table 365, a value of an HTML tag input by the reference user is displayed, for each reference user. In addition, an item "update money amount" indicates whether or not the reference user selects an "update" button (see Fig. 9A). In a case where the "update" button is selected, "OK" is displayed, and in a case where the "update" button is not selected, "<No input>" is displayed. Therefore, information of a plurality of reference users can be collectively referred to.

A field of the reference user "Mr. C" of which input information to the purchase application page of the website is not recorded may be omitted and may be hidden.

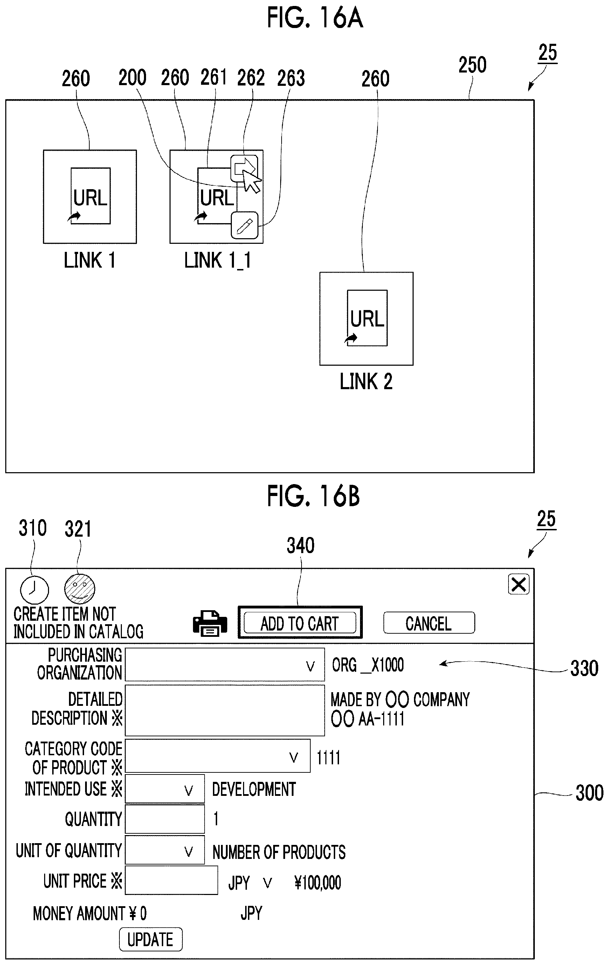

Figs. 16A and 16B are diagrams illustrating still another example of the display example in the display unit 25 to which the present exemplary embodiment is applied, Fig. 16A illustrates a state in which the new link object 260 is displayed on the dedicated UI 250, and Fig. 16B illustrates a state in which a link destination website of the new link object 260 is displayed on the browser screen 300.

In the present exemplary embodiment, in a case where the creation of the new link object 260 associated with reference information of the reference user "Mr. A" is instructed on the reference user selection screen 3100 illustrated in Fig. 14A, as illustrated in Fig. 16A, the new link object 260 is displayed on the dedicated UI 250.

In the display example illustrated in Fig. 16A, the link objects 260 of "link 1" and "link 2" and the new link object 260 are displayed on the dedicated UI 250.

The new link object 260 is the link object 260 of "link 1_1" to which the reference information of the reference user "Mr. A" is associated, among a plurality of reference information associated with the link object 260 of "link 1". Therefore, in a case where a using user uses a link destination website of the link object 260, it is possible to prevent reference information that is not required by the using user from being displayed.

Further, the access button 262 and the recording mode button 263 may be displayed in a state in which the cursor 200 is positioned on the link object 260. In other words, the access button 262 and the recording mode button 263 may be displayed in a state in which the link object 260 is designated.

Further, in a case where a link destination web page of the link object 260 of "link 1_1" illustrated in Fig. 16A is displayed, as illustrated in Fig. 16B, the reference information of the reference user "Mr. A" selected by the using user on this web page is displayed.

In a case where the access button 262 (see Fig. 16A) of the link object 260 of "link 1_1" is selected, first, a login page is displayed, and a homepage and a purchase application page are displayed according to an operation of the using user, on the browser screen 300.

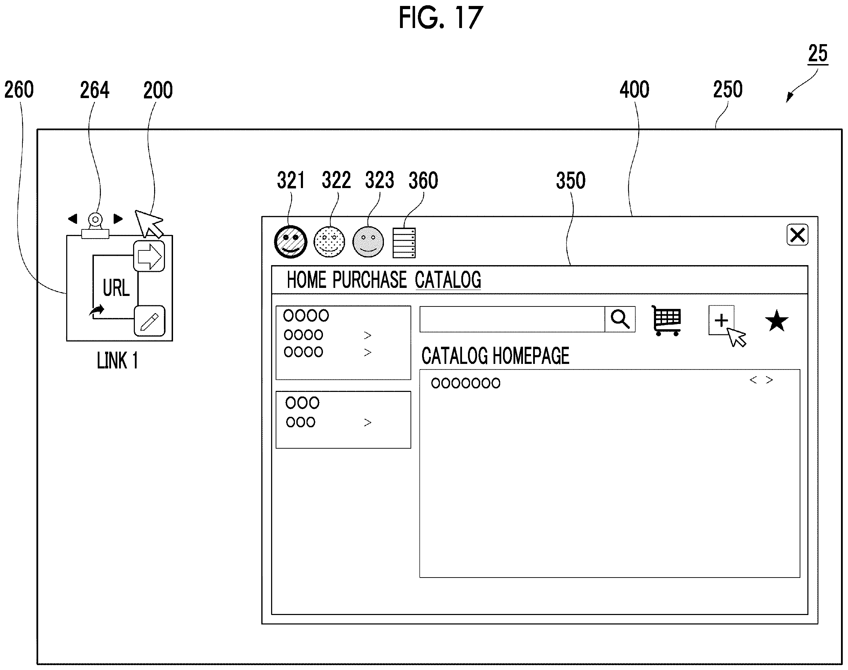

Fig. 17 is a diagram illustrating still another example of the display example in the display unit 25 to which the present exemplary embodiment is applied. Fig. 17 illustrates a case where the link object 260 is associated with a snapshot 350 in a case where a reference user performs an input to a link destination website of the link object 260, as an example.

In the display example illustrated in Fig. 17, the link object 260 and a browsing screen 400 in which reference information of the reference user in a state in which the link destination website of the link object 260 is not accessed is illustrated are displayed on the dedicated UI 250. The link object 260 illustrated in Fig. 17 includes a browsing button 264 that accepts an instruction related to the display of the browsing screen 400 from a using user.

The browsing button 264 is displayed in a case where input information of the reference user to the link destination website of the link object 260 is recorded. For example, as the browsing button 264, a clip image and right and left button images of the clip image are displayed. In a case where any of the right and left button images is selected by the using user, the browsing screen 400 is displayed. Further, in a case where any of the right and left button images is selected by the using user in a state in which the browsing screen 400 is displayed, the display of the reference information of the reference user is switched, on the browsing screen 400.

In a case where the reference information of the reference user is displayed on a single page, the right and left button images may not be displayed as the browsing button 264, and an instruction to display the browsing screen 400 may be accepted from the user by selecting the clip image. In addition, in a case where the input information of the reference user to the link destination website of the link object 260 is not recorded, the browsing button 264 is hidden.

The browsing screen 400 is a screen on which the snapshot 350 associated with the link object 260 can be browsed in order. Specifically, the browsing screen 400 is a screen on which the input information of the reference user to this website can be browsed by the snapshot 350 without accessing the link destination website of the link object 260. Therefore, the using user can refer to the input information of the reference user without actually operating the link destination website of the link object 260.

Further, the plurality of reference user icons 321, 322, and 323 and the list display button 360 may be displayed on the browsing screen 400.

In the same manner as the browser screen 300 illustrated in Fig. 14B, the reference user icon 321 corresponding to the reference user "Mr. A" who inputs the input information that is a source of the display of the displayed snapshot 350 may be displayed to be identifiable from the other reference user icons 322 and 323, on the browsing screen 400.

Further, in a case where the list display button 360 is selected, the list table 365 may be displayed on the browsing screen 400, in the same manner as the browser screen 300 illustrated in Fig. 15.

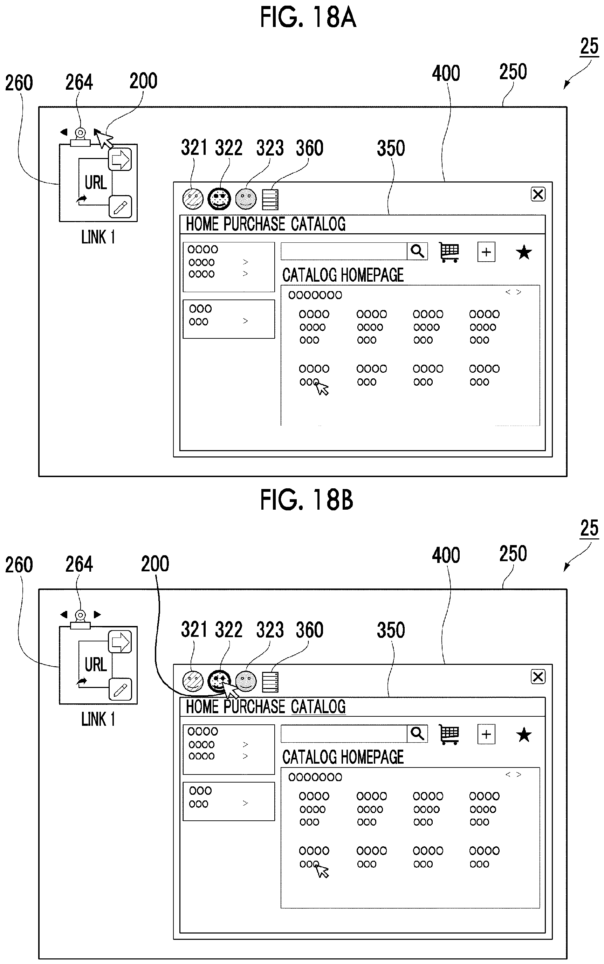

Figs. 18A and 18B are diagrams illustrating still another example of the display example in the display unit 25 to which the present exemplary embodiment is applied, Fig. 18A illustrates a state in which the browsing button 264 is selected, and Fig. 18B illustrates a state in which the reference user icon 322 is selected.

In the present exemplary embodiment, in a case where the browsing button 264 is selected several times from the state illustrated in Fig. 17, as illustrated in Fig. 18A, the reference user who inputs input information as a source of the display of the displayed snapshot 350 is switched.

In the display example illustrated in Fig. 18A, the snapshot 350 in a case where the reference user "Mr. B" performs an input to a link destination website of the link object 260 is displayed on the browsing screen 400. Further, the reference user icon 322 corresponding to the reference user "Mr. B" is displayed to be identifiable from the other reference user icons 321 and 323. Therefore, the input information of the plurality of reference users can be continuously referred to.

In addition, in a case where the reference user icon 322 is selected from the state illustrated in Fig. 17, the snapshot 350 of the reference user "Mr. B" may be displayed on the browsing screen 400, as illustrated in Fig. 18B. Therefore, a time required for displaying the snapshot 350 of the reference user that the user wants to refer to is reduced.

### (Information as Management Target of Information Processing System)

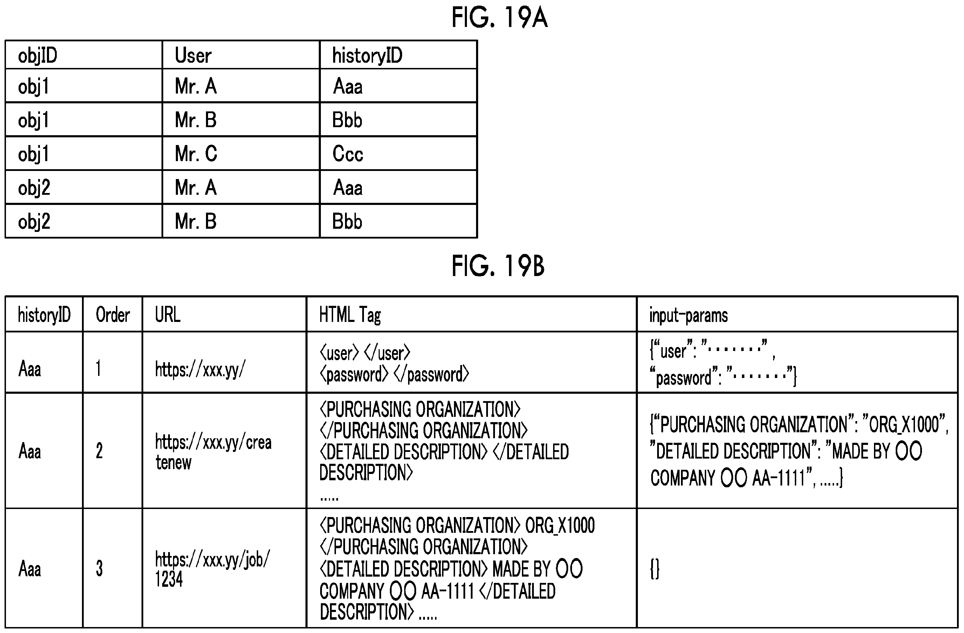

Figs. 19A and 19B are diagrams illustrating an example of information managed by the information processing system 1, Fig. 19A illustrates information indicating an operation history of a plurality of reference users for a link object, and Fig. 19B illustrates information indicating an input history of one reference user to a link destination website of the link object.

Here, Figs. 19A and 19B illustrate information to be recorded by the secondary storage unit 12 (see Fig. 2) as information of a management target of the information processing system 1.

In the example illustrated in Fig. 19A, information on items "objID", "User", and "historyID" is recorded in the secondary storage unit 12 for the link object managed by the information processing system 1. In the item "objID", for example, identifiers "Obj 1" and "Obj2" of the link objects of "link 1" and "link 2" are indicated as identifiers of a link object that identifies the link object. In the item "User", for example, the reference users "Mr. A", "Mr. B", and "Mr. C" are indicated as user names of users who open the link destination website of the link object. In the item "history ID", for example, an identifier "Aaa" of an operation history of the reference user "Mr. A" with respect to the link object of "link 1" is indicated as an identifier of an operation history for identifying the operation history by a user.

The identifier of the operation history is given each time the link destination website of the link object is opened. In a case where the reference user "Mr. A" opens the link destination website of the link object of "Link 1" again, for example, the identifier "Obj 1" of the link object, the user name "Mr. A", and an identifier "Ddd" of the operation history are given.

In the example illustrated in Fig. 19B, for the input history for the link destination website of the link object managed by the information processing system 1, information on the items "historyID", "Order", "URL", "HTML Tag", and "Input-params" is recorded in the secondary storage unit 12. In the item "Order", an order of operations associated with the identifier of the operation history indicated in the item "historyID" is indicated. The item "URL" indicates a URL of a web page of the website, and the item "HTML Tag" indicates an HTML tag in the web page. In addition, in the item "Input-params", a value of the HTML tag input to the web page in the order of the operations of the item "Order" is indicated. The URL of the web page displayed in the order indicated in the item "Order", the HTML tag in the web page, and the value of the input HTML tag associated with each other are recorded in the secondary storage unit 12.

In the example illustrated in Fig. 19B, an input history of the reference user "Mr. A" to the link destination website of the link object of "Link 1" is linked is illustrated. In other words, an operation flow of the reference user "Mr. A" with respect to the link destination website of the link object of "link 1" is linked is illustrated.

For example, in a case where the reference user "Mr. A" logs in by inputting a user ID and a password on the login page of the website illustrated in Fig. 8A, information indicating a first operation associated with the identifier "Aaa" of the operation history of the reference user "Mr. A" is recorded. In addition, in a case where the reference user "Mr. A" inputs information of various items on the purchase application page of the website illustrated in Fig. 9A, information indicating a second operation associated with the identifier "Aaa" of the operation history of the reference user "Mr. A" is recorded. In a case where the reference user "Mr. A" selects the "add to cart" button illustrated in Fig. 9A, information indicating a third operation associated with the identifier "Aaa" of the operation history of the reference user "Mr. A" is recorded.

In displaying the reference information, the information processing system 1 specifies input information of a reference user that can be referred to by a using user, based on an operation history or an input history of the reference user that is managed, and displays reference information based on the specified input information on the display unit 25 (see Fig. 1).

The processing performed by the information processing system in each exemplary embodiment is prepared as, for example, a program such as application software. The program executed by the CPU 11a (see Fig. 2) as an example of the processor in each exemplary embodiment may be provided in a state of being stored in a computer readable recording medium, such as a magnetic recording medium (magnetic tape, magnetic disk, or the like), an optical recording medium (optical disk or the like), an optical magnetic recording medium, or a semiconductor memory. The program executed by the CPU 11a may be provided by using a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) An information processing system comprising:
   one or a plurality of processors configured to:
   manage input information that is information input to a website by a first user, in association with link information of the website; and
   in a case where an image related to the link information displayed on a display unit is selected by a second user different from the first user, display the input information of the first user associated with the link information on the display unit.
(((2))) The information processing system according to (((1))), wherein the one or plurality of processors are configured to:
   display the input information of the first user to the website accessed by the second user, among the input information of the first user.
(((3))) The information processing system according to (((2))), wherein the one or plurality of processors are configured to:
   display the input information of the first user to the website accessed by the second user, in accordance with a transition of a web page included in the website.
(((4))) The information processing system according to (((1))), wherein the one or plurality of processors are configured to:
   display the input information of the first user in a state in which the second user does not access the website related to the selected image.
(((5))) The information processing system according to any one of (((1))) to (((4))), wherein the one or plurality of processors are configured to:
   identifiably display a component selected by the first user, among components of a web page included in the website related to the image selected by the second user.
(((6))) The information processing system according to any one of (((1))) to (((5))), wherein the one or plurality of processors are configured to:
   not display a content of information satisfying a predetermined condition on the display unit even in a case where the information is the input information of the first user to the website related to the image selected by the second user.
(((7))) The information processing system according to (((6))),
   wherein the predetermined condition is secret information of the first user.
(((8))) The information processing system according to any one of (((1))) to (((7))), wherein the one or plurality of processors are configured to:
   in a case where a plurality of pieces of input information input by a plurality of first users are associated with one link information, identifiably display each of the plurality of pieces of input information.
(((9))) The information processing system according to (((8))), wherein the one or plurality of processors are configured to:
   display each of the plurality of pieces of input information for each of the first users who input the input information.
(((10))) The information processing system according to (((8))), wherein the one or plurality of processors are configured to:
   display a list of contents of the plurality of pieces of input information.
(((11))) The information processing system according to any one of (((1))) to (((10))), wherein the one or plurality of processors are configured to:
   in a case where a plurality of pieces of input information input by a plurality of first users are associated with one link information, display user information indicating each of the plurality of first users, together with the input information.
(((12))) The information processing system according to (((11))), wherein the one or plurality of processors are configured to:
   identifiably display the user information between the first user who inputs the input information to one web page included in the website accessed by using the one link information and the first user who does not input the input information to the one web page.
(((13))) The information processing system according to any one of (((1))) to (((12))), wherein the one or plurality of processors are configured to:
   in a case where the image is selected by the second user and one first user is selected by the second user among first users who input the input information associated with the link information related to the image, display a new image related to the link information associated with the input information of the one first user.
(((14))) The information processing system according to any one of (((1))) to (((13))), wherein the one or plurality of processors are configured to:
   display a button image that accepts an instruction related to an association between the input information to the website and the link information of the website from the first user, in association with the image.
(((15))) A program causing a computer to realize:
   a function of managing input information that is information input to a website by a first user, in association with link information of the website; and
   a function of displaying, in a case where an image related to the link information displayed on a display unit is selected by a second user different from the first user, the input information of the first user associated with the link information on the display unit.

According to the information processing system according to (((1))), it is possible to improve convenience of a user who uses the website, as compared with a configuration in which only input information by the user is used.

According to the information processing system according to (((2))), it is possible to improve the convenience of the user who uses the website, as compared with a configuration in which only the input information of the user to the website being accessed is displayed.

According to the information processing system according to (((3))), it is possible to improve the convenience of the user who uses the website, as compared with a configuration in which the input information is displayed without considering the displayed web page.

According to the information processing system according to (((4))), it is possible to improve the convenience of the user who intends to use the website, as compared with a configuration in which the input information is displayed in a case where the user is accessing the website.

According to the information processing system according to (((5))), it is possible to improve the convenience of the user who selects the component, as compared with a configuration in which the components of the web page included in the website are uniformly displayed.

According to the information processing system according to (((6))), it is possible to improve the convenience of the user who refers to the input information of other users, as compared with a configuration in which contents of all the input information of the other users are displayed.

According to the information processing system according to (((7))), it is possible to protect a privacy of the other user, as compared with a configuration in which the contents of all the input information of the other users are displayed.

According to the information processing system according to (((8))), it is possible to improve the convenience of the user who refers to the plurality of pieces of input information, as compared with a configuration in which the pieces of input information of the different users are uniformly displayed.

According to the information processing system according to (((9))), it is possible to improve the convenience of the user who refers to the plurality of pieces of input information, as compared with a configuration in which the pieces of input information of the different users are uniformly displayed.

According to the information processing system according to (((10))), it is possible to improve the convenience of the user who refers to the plurality of pieces of input information, as compared with a configuration in which the input information is displayed for each user.

According to the information processing system according to (((11))), it is possible to improve the convenience of the user who refers to the input information of a plurality of users, as compared with a configuration in which only the input information is displayed.

According to the information processing system according to (((12))), it is possible to improve the convenience of the user who refers to the user information, as compared with a configuration in which the user information is uniformly displayed regardless of the presence or absence of input information.

According to the information processing system according to (((13))), it is possible to display the new image related to the link information associated with the input information required by the user.

According to the information processing system according to (((14))), it is possible to accept the instruction related to the association between the input information and the link information.

According to the program according to (((15))), it is possible to improve the convenience of the user who uses the website, as compared with a configuration in which only the input information by the user is used.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
10: management server
11a: CPU
20: user terminal
25: display unit
101: information management unit
102: information acquisition unit
103: analysis unit
104: information generation unit
105: transmission control unit
250: dedicated UI
260: link object
263: recording mode button
300: browser screen
310: reference button
320: reference user icon
330: reference text
340: notification image
350: snapshot
365: list table
400: browsing screen

## Claims

1. An information processing system comprising:
one or a plurality of processors configured to:
manage input information that is information input to a website by a first user, in association with link information of the website; and
in a case where an image related to the link information displayed on a display unit is selected by a second user different from the first user, display the input information of the first user associated with the link information on the display unit.

2. The information processing system according to claim 1, wherein the one or plurality of processors are configured to:
display the input information of the first user to the website accessed by the second user, among the input information of the first user.

3. The information processing system according to claim 2, wherein the one or plurality of processors are configured to:
display the input information of the first user to the website accessed by the second user, in accordance with a transition of a web page included in the website.

4. The information processing system according to claim 1, wherein the one or plurality of processors are configured to:
display the input information of the first user in a state in which the second user does not access the website related to the selected image.

5. The information processing system according to any one of claims 1 to 4, wherein the one or plurality of processors are configured to:
identifiably display a component selected by the first user, among components of a web page included in the website related to the image selected by the second user.

6. The information processing system according to any one of claims 1 to 5, wherein the one or plurality of processors are configured to:
not display a content of information satisfying a predetermined condition on the display unit even in a case where the information is the input information of the first user to the website related to the image selected by the second user.

7. The information processing system according to claim 6,
wherein the predetermined condition is secret information of the first user.

8. The information processing system according to any one of claims 1 to 7, wherein the one or plurality of processors are configured to:
in a case where a plurality of pieces of input information input by a plurality of first users are associated with one link information, identifiably display each of the plurality of pieces of input information.

9. The information processing system according to claim 8, wherein the one or plurality of processors are configured to:
display each of the plurality of pieces of input information for each of the first users who input the input information.

10. The information processing system according to claim 8, wherein the one or plurality of processors are configured to:
display a list of contents of the plurality of pieces of input information.

11. The information processing system according to any one of claims 1 to 10, wherein the one or plurality of processors are configured to:
in a case where a plurality of pieces of input information input by a plurality of first users are associated with one link information, display user information indicating each of the plurality of first users, together with the input information.

12. The information processing system according to claim 11, wherein the one or plurality of processors are configured to:
identifiably display the user information between the first user who inputs the input information to one web page included in the website accessed by using the one link information and the first user who does not input the input information to the one web page.

13. The information processing system according to any one of claims 1 to 12, wherein the one or plurality of processors are configured to:
in a case where the image is selected by the second user and one first user is selected by the second user among first users who input the input information associated with the link information related to the image, display a new image related to the link information associated with the input information of the one first user.

14. The information processing system according to any one of claims 1 to 13, wherein the one or plurality of processors are configured to:
display a button image that accepts an instruction related to an association between the input information to the website and the link information of the website from the first user, in association with the image.

15. A program causing a computer to realize:
a function of managing input information that is information input to a website by a first user, in association with link information of the website; and
a function of displaying, in a case where an image related to the link information displayed on a display unit is selected by a second user different from the first user, the input information of the first user associated with the link information on the display unit.
